# EUROPEAN PATENT APPLICATION

(11) **EP 2 381 372 A1**
(43) Date of publication of application: **26.10.2011**
(21) Application number: 10193729.0
(22) Date of filing: 03.12.2010
(51) Int. Cl.: G06F 17/30

(54) **Visual shuffling of media icons**

(30) Priority: 23.04.2010 US 327186 P
(71) Applicant: RESEARCH IN MOTION LIMITED, Waterloo, Ontario N2L 3W8 (CA)
(72) Inventor: Runstedler, Christopher James, Waterloo Ontario N2L 3W8 (CA); Patterson, Andrew Robert, Waterloo Ontario N2L 3L3 (CA); Smith, Michael Gregory, Waterloo Ontario N2L 3L3 (CA)
(74) Representative: Fennell, Gareth Charles

(57) **Abstract**

An apparatus and method for shuffling a media file in a playlist. A first playlist order of a plurality of media files is created for displaying a plurality of icons corresponding to one of the plurality of media files. The plurality icons are arranged according to the first playlist order on the display. Upon receiving a request for a second playlist order a second playlist order is created. While displaying the plurality of icons in the first playlist order, movement of at least two icons on the display is shown between a first position and a second position, wherein the first position corresponds to the first playlist order and the second position corresponds to the second playlist order.

## Description

### CROSS-RELATED APPLICATIONS

This application claims the benefit of U.S. Provisional Application No. 61/327,186, filed on April 23, 2010, which is incorporated herein by reference in its entirety.

### FIELD OF TECHNOLOGY

The present disclosure relates generally to mobile devices having a media player. More specifically, the present disclosure relates to controlling the shuffling of media files on the mobile device.

### BACKGROUND

With the advent of more robust electronic systems, advancements of mobile devices are becoming more prevalent. Mobile devices can provide a variety of functions including, for example, telephonic, audio/video, and gaming functions. Mobile devices can include mobile stations such as cellular telephones, smart telephones, portable gaming systems, portable audio and video players, electronic writing or typing tablets, handheld messaging devices, personal digital assistants, and handheld computers.

Mobile devices allow users to have an integrated device which can perform a variety of different tasks. For example, a mobile device can be enabled for voice transmission (cell phones), text transmission (pagers and PDAs), sending and receiving data for viewing of Internet websites, multi-media messages, videography and photography. While some mobile devices may include all of these functions, other devices can be limited to just a sub-set of these functions. Mobile devices can also include one or more media applications which enable playback of a media file. When enabled for media playback, the operator can listen to music, watch videos or animation, and the like.

### BRIEF DESCRIPTION OF THE DRAWINGS

Implementations of the present disclosure will now be described, by way of example only, with reference to the attached Figures, wherein:

FIG. 1 is a front view of an example of a mobile device with an illustrative graphical user interface;

FIG. 2 is an illustrative graphical user interface, wherein icons associated with media files are shown in transition from a first position;

FIG. 3 is an illustrative graphical user interface, wherein icons associated with media files are shown in transition to a second position

FIG. 4 is an alternative graphical user interface, wherein the icons are in a first position;

FIG. 5 is an illustrative transition of the icons of FIG. 4 from the first position to a second position;

FIG. 6 is an alternative graphical user interface of FIG. 4, wherein the icons are in a second position;

FIG. 7 is a block diagram representing a mobile device in accordance with an exemplary implementation interacting with a communication network; and

FIG. 8 is a flow chart of a method of visually shuffling media icons.

### DETAILED DESCRIPTION

For simplicity and clarity of illustration, where appropriate, reference numerals have been repeated among the different figures to indicate corresponding or analogous elements. In addition, numerous specific details are set forth in order to provide a thorough understanding of the implementations described herein. However, those of ordinary skill in the art will understand that the implementations described herein can be practiced without these specific details. In other instances, methods, procedures and components have not been described in detail so as not to obscure the related relevant feature being described. Also, the description is not to be considered as limiting the scope of the implementations described herein.

Several definitions that apply throughout this document will now be presented. The word "coupled" is defined as connected, whether directly or indirectly through intervening components and is not necessarily limited to physical connections. The term "mobile device" is defined as any electronic device that is capable of at least accepting information entries or commands from a user and includes its own power source. The term "icon" is any graphical element represented on the display. Examples of icons include photos, graphical symbols, image, clip art, and the like. Further definitions will be presented below.

As described herein, the mobile device is provided with a media application for playing media files. The media application can be configured to play audio files, video files, animation and the like. In at least one implementation, a single media application is capable of playing two or more types of media files; for instance, the same media application might play both audio and video files. In other implementations, multiple media applications can be implemented, and each one can be specifically designated to run a particular type of media. In other implementations, a combination of different media applications can be implemented, with different media applications being able to play the same type of media file.

When a plurality of media files are available on the mobile device, the media files can be presented to the operator on a graphical user interface such as a display. The display can include a touch sensitive display screen, a liquid crystal display, a light emitting diode display, and the like. The media files can be represented on the display in the form of a list, icons and the like. In at least one implementation, the media files can be represented by both icons and lists. In at least one implementation, the list of media files also includes an icon. The icon can either be user selected, provided with data associated with the media, downloaded along with the media, or obtained based upon information associated with the media from an internet source. For example, when the media is an audio file such as a song from an artist, the icon associated with the media can be the cover of one of the artist's album. Additionally, the icon can be obtained through the internet based upon a cover associated with the individual song or the album which the song is associated. For example, if a song is obtained from a compact disc album, title and/or track information associated with the song can be used to search for internet icons for the song and album. The operator can select from the icons found during the internet search and associate the icon with the song. While examples herein are described in relation to songs other examples for videos and the like are considered within the scope of this disclosure.

When an operator has one or more media files available for playing on the mobile device, playlists can be created so that the media in the playlist is played in the order specified by the operator. The playlist can contain one type of media file or the playlist can contain more than one type of media file. For example, the playlist can only contain songs or the playlist can contain a mixture of songs and videos. In one implementation, the playlist can be customized by the operator of the mobile device. The operator can order the media files in the playlist based upon the title of the media file, artist, genre, and the like. The operator can also shuffle the media files so that the order of the media files is randomized according to a predetermined randomization routine.

In at least one implementation as presented herein, a method is provided for visually signifying the shuffling of media files in a playlist. The method includes creating a first playlist order of a plurality of media files. This first playlist order of media files can be created automatically or the first playlist order can be in response to a request to play the media files based upon a shuffle command. The method further includes displaying a plurality of icons, each icon corresponding to one of the plurality of media files on a display of the mobile device. The plurality of icons are arranged according to the first playlist order of the plurality of media files. Examples of possible arrangements are described in relation to the figures below. The present disclosure contemplates that other arrangements would fall within the scope of this disclosure as well.

The method further includes receiving a request for a second playlist order of the plurality of media files. For example, the request can be input using a key on the mobile device or a touch on a touch display when the device is equipped with a touch display. A second playlist order of the plurality of media files is created in response to receiving the request for the second playlist order. While displaying the plurality of icons in the first playlist order, the method shows the movement of at least two icons on the display so that the at least two icons are illustrated in transition between a first position corresponding to the first playlist order and a second position corresponding to the second playlist order.

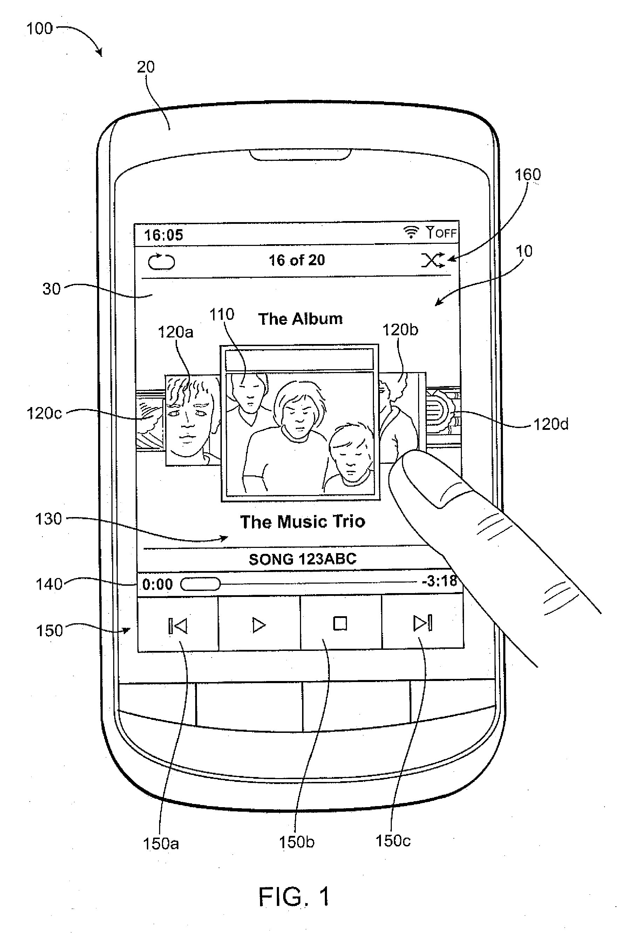

An example of a mobile device 100 according to the present disclosure is illustrated in FIG. 1. The mobile device 100 includes a housing 20 that houses internal components. The housing 20 frames a touch-sensitive display 30 such that the touch-sensitive display 30 is exposed for user interaction therewith when the mobile device 100 is in use. As will be described below, the touch-sensitive display 30 may display or render any suitable number of user-selectable features, such as virtual buttons, keys or selectable icons. The mobile device 100 is depicted in FIG. 1 in a portrait orientation, in which the user 40 holds the device 100 so that the display 30 is taller than the display 30 is wide. The concepts described herein can be implemented on a mobile device having a display of any shape or orientation.

The touch-sensitive display 30 may be any kind of touch-sensitive display, such as a capacitive, resistive, infrared, surface acoustic wave touch-sensitive display, strain gauge, optical imaging, dispersive signal technology, acoustic pulse recognition, contactless touch screens that detect finger movements and so forth. One or more touches - also known as touch events - may be detected by the touch-sensitive display 30. In the illustrated implementation, a finger 40 is shown touching the display 30. In other implementations, a stylus or other object can touch the display 30 as well. A touch or touch event is not necessarily limited to a physical touch, as in the case of contactless touch screens. In such a case, a user's finger or some other suitable object may be moved in front of (but not in contact with) a contactless touch screen which can recognize the movement of the finger or object for purposes of executing some function based on the recognized movement. A "touch event" is defined as an action directed towards a touch-sensitive display that causes a corresponding execution of a function on the display and includes both actual physical contact and a contactless action in which there is no direct physical contact with the touch-sensitive display.

A processor module in the housing 20 may determine attributes of a touch, including a location of the touch. Touch location data may include an area of contact or a single point of contact, such as a point at or near a center of the area of contact. The location of a detected touch may include x and y components, e.g., horizontal and vertical components, respectively, with respect to a view by the user 40 of the touch-sensitive display 30. For example, the x location component may be determined by a signal generated from one touch sensor, and the y location component may be determined by a signal generated from another touch sensor. A touch may be detected from any suitable object, such as a finger, thumb, appendage, or other item, for example, a stylus, pen, or other pointer, depending on the nature of the touch-sensitive display 30. Multiple simultaneous touches may be detected.

In some implementations, the display 30 may provide tactile feedback. One or more actuators (not shown), such as spring-loaded switches or piezoelectric actuators, may be depressed by applying force to the touch-sensitive display 30. Pressing the display 30 may be electronically detectable and may be one technique by which the user 40 may make a selection (that is, one technique by which a selection input may be received). The display 30 may also be electronically driven to provide tactile feedback to the user 40. Audio feedback also may be provided, to indicate to the user 40 that he or she has depressed (or "clicked") or otherwise activated the display 30.

In addition to presses and touches, the touch-sensitive display 30 may be configured to detect moving touches, including contactless movements. As an example, the user 40 may touch the screen 30 with his or her finger and slide the finger along the screen 30. For purposes of this description, any moving or static touch events represent ways by which a user may make a selection.

In the implementation shown in FIG. 1, the mobile device 100 also includes one or more physical buttons 50, by which the user 40 may make a selection. For ease of description, the concepts will be described in terms of the various touch events.

FIG. 1 shows an exemplary graphical user interface 10 displayed on the display 30. The graphical user interface 10 depicts an interface for use with media files. For simplicity of explanation, the media files will be described as music audio tracks. The concepts may be adapted to, however, media content of other types, including video, still pictures, speeches, audio blogs or other audio recordings. The mobile device 100 may output the audio via any speaker, headphone or other audio interface (not shown).

Conventional marketing of music has typically involved sale of a collection of musical selections as a group (conventionally known as an "album"). A user may desire to hear one or more musical selections (for example, one or more songs) from the album. The graphical user interface 10 supports easy browsing of collections of albums and songs.

In one implementation, the graphical user interface 10 depicts the albums as icons. The plurality of icons are displayed according to a first playlist order of the plurality of media files. As shown in FIG. 1, one icon 110 is prominent (in this case, larger and appearing to be closer to the user 40) and other icons 120a-d are less prominent. As shown in FIG 1, other icons 120a and 120b are more prominent than icons 120c and 120d. In a typical implementation, the icons 110, 120a-d represent the albums, and may be represented by the artwork associated with the album. As shown in FIG. 1, text 130 may be rendered proximate to the prominent icon 110 indicating information such as the name of the artist, the genre, the album title, the song being played, songs on the album and their playing time and so on. In another implementation, the icons may 110, 120a-d represent individual audio tracks or other audio, video or multimedia content. In this implementation, the icons 110, 120a-d are arranged in a curvilinear array. The curvilinear array as illustrated approximates a semicircular array whereby the mid points of the icons 110, 120a-d from a top view would be in a semicircle. The icons 110, 120a-d however are illustrated as facing the operator of the mobile device 100. In other arrangements, the icons 110, 120a-d can be arranged in a linear array, triangular array or other polygonal array.

As an option, if the icon 110, 120a-d represents an album or some other collection of audio, video or multimedia recordings, the graphical user interface 10 may include additional menus, pop-ups, lists or other interfaces by which a user may select a particular song or other recording from a selected album or collection. These menus, pop-ups, lists or other interfaces may be displayed for a prominent icon or for non-prominent icons or both.

As noted previously, an icon may be displayed in a prominent position. "Prominent" may mean, but does not necessarily mean, that the icon is larger or appears closer, or that the icon appears in the horizontal center of the display 30. Displaying an icon in a prominent position may include any technique for setting the icon apart from other icons that may be appearing on the display 30. The prominent position may have a unique color, for example, or be higher on the screen, be accompanied by a visual effect or have a larger size as compared to non-prominent icons. For example, the icon displayed in a prominent position may appear normally, while other icons appear slightly blurred, or in black and white. The prominent position typically gives the icon in the prominent position an indication (usually but not necessarily always a unique indication) of being somehow special and apart from the other icons.

The graphical user interface 10 may include any number of indicators or controls. By way of example, FIG 1 depicts a slider bar 140 that may indicate volume or progress through the song. FIG. 1 also depicts a control panel 150 having other indicators and virtual buttons that can be selected by a touch event. Selection of button 150a, for example, may cause the audio output to change from the song being currently played to a song that precedes the currently-played song on the album, and selection of button 150c may cause the audio output to change from the song being currently played to a song that follows the currently-played song on the album. Selection of button 150b may cause the song being currently played to pause. Other functions may be executed from the control panel 150, such as a shuffle function or functions associated with the display of video, including fast-forward or slow-motion buttons.

In the implementation depicted in FIG. 1, the user 40 can change which icon 110, 120 is prominent by sliding a finger across the display 30. When the user 40 slides the finger to the right, for example, icon 110 becomes less prominent (taking the position of icon 120b), and icon 120a becomes more prominent, taking the place of icon 110. In another implementation, the user 40 may touch the prominent icon 110, which causes the prominent icon 110 to drop back into a non-prominent position in the collection of icons 120. This touching also includes a contactless point or a slide across the display 30 by the user. The user 40 may then cause the non-prominent icons 120 to scroll across the display 30 by sliding a finger across the display 30. When the user 40 locates another icon 120 to make prominent, the user 40 may simply touch or point at the desired icon 120. At this point, the non-prominent icon 120 becomes a prominent icon 110. This process maybe repeated, if desired.

As shown in FIG. 1, a function icon 160 is superimposed on the prominent icon 110. As shown in FIG. 1, superimposed function icon 160 is effectively opaque. In another implementation, superimposing the function icon 160 includes presentation of a function icon 160 that is partially transparent, such that the underlying icon 110 could be perceived as being "seen through" the function icon 160. The location of the function icon 160 (roughly in the center of icon 110), and the shape and general appearance of the function icon 160 are illustrative. The concepts described herein are not restricted to a command icon having any particular shape, size, position or appearance.

In FIG. 1, the function icon 160 includes the rightward-pointing triangle that is a typical symbol meaning "Play." Other examples of functional icons include the double vertical bar symbol that means "Pause" or a looped arrow symbol that may mean "Repeat." The concepts described herein are not limited to any particular function icons. Moreover, the concepts described herein do not exclude the possibility that one or more function icons may include words, abbreviations or letters.

In FIG. 1, only the prominent icon 110 includes a superimposed function icon 160. As will be discussed below, however, the concept includes implementations in which other icons 120 may include superimposed command icons, even when those icons 120 are not in the prominent position of icon 110.

An operator can request a second order of the icons 110, 120 by touching the shuffle key 160 located in the top right corner of the graphical user interface 10. The shuffle key 160 causes the processor module to execute instructions to create a second playlist order of the plurality of media files. The processor module also executes instructions while displaying the plurality of icons 110, 120 in the first playlist order to move at least two icons on the display 30 so that the at least two icons are illustrated in transition between a first position corresponding to the first playlist order and a second position corresponding to the second playlist order.

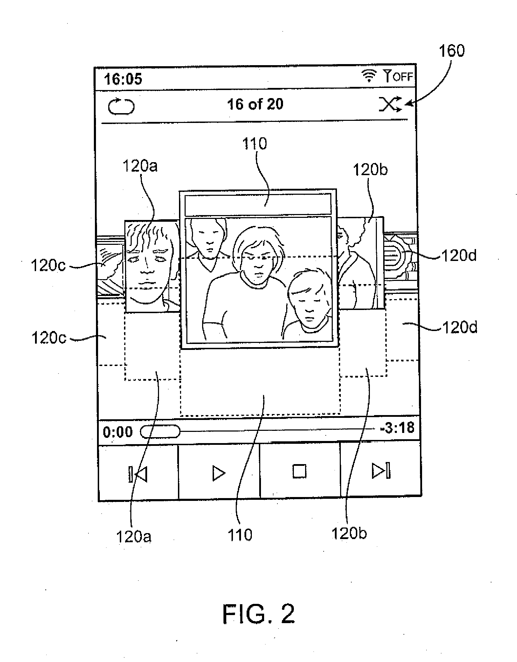

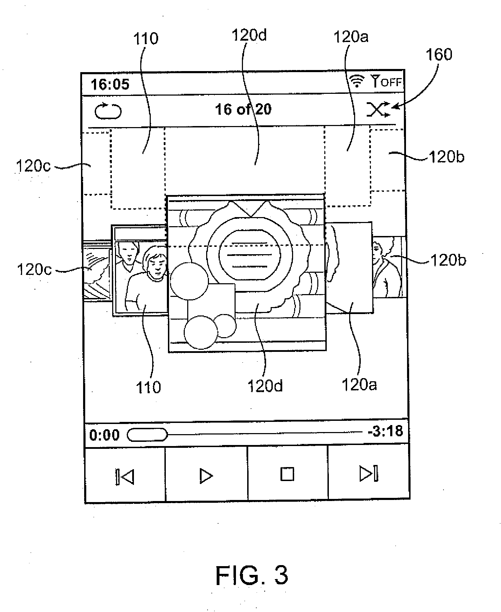

One example of the transitions between the first position and the second position is illustrated in FIGS. 2 and 3. As illustrated in FIG. 2, the icons 110, 120 are arranged in a first position based on the first playlist order that was created for the plurality of media files. The plurality of media files for which the order is created can include all the media files on the mobile device 100 or a subset of the media files on the mobile device 100. The subset of media files can be organized based on media file type such as music, videos, animation or the like. Additionally, the subset of media can be organized based on header information such as album title, song title, genre, artist, or the like.

The first position of the icons 110, 120 is illustrated in substantially the vertical center of the graphical user interface 10. In the first playlist order, the icons are in the following order from left to right 120c, 120a, 110, 120b, 120d. As illustrated in FIGS. 2 and 3, the icons 110, 120 are shown in transition from a first position to a second position corresponding to the second playlist order. In the illustrated implementation, only five icons are displayed on the display 30, but in other implementations more than five icons can be used. As contemplated by the disclosure, the shuffle operation as described herein can be performed on fewer than five icons so that at least two of the icons are shown in transition from a first position to a second position. Additionally, while in the illustrated implementations the icons shown on the display screen are the same icons in both the first position and the second position, the present disclosure contemplates that in at least one implementation one or more icons as displayed in the first position are not visible when the icons are arranged in the second position. The icons 110, 120 are illustrated in phantom during the transition. The icons 110, 120 are illustrated in FIG 2 as moving downward towards the bottom of the display 30. As illustrated, the icons 110, 120 retain the first order as they move downward to the bottom of the display and eventually off of the display. This transition of the icons 110, 120 signifies to the operator that the order of the icons is changing. The position order of the icons 110, 120 during the transition are transitionary positions between the first position and the second position, which will be described herein. The order of the icons 110, 120 in the transitionary positions changes from the order of the icons 110, 120 in the first position indicating the shuffling of the icons 110, 120 according the present disclosure. While the icons 110, 120 retain the first order as they transition to the bottom of the display 30, the icons 110, 120 can change order in these transitionary positions as well. For example, as the icons transition the icons can be in the second order associated with the second position or can be in a transitionary order.

As illustrated in FIG 3, the icons 110, 120 reappear on the display 30 from the top of the display 30. As shown in phantom, the icons 110, 120 in transition from the top of the display 30 are shown in a second playlist order. The icons 110, 120 transition to stop in the second position shown in substantially the vertical center of the display 30. The location of the icons 110, 120 in substantially the vertical center of the display 30 can be a home position of the icons 110, 120 where the icons are presented for operator interaction in the home position. In other implementations, the home position can be located in a different position on the display 30. The second playlist order has icons arranged in the following order 120c, 110, 120d, 120a, 120b. While the illustrated implementations in FIGS. 2 and 3 display all of the icons 110, 120 in transition, the disclosure contemplates that in at least one implementation, only two of the plurality of icons 110, 120 can transition from the first position to the second position. While the icons 110, 120 occupy various positions on the display 30, the starting position is described herein as the first position and the stopping position is described as a second position. In other implementations, multiple intermediary positions can be displayed momentarily as well.

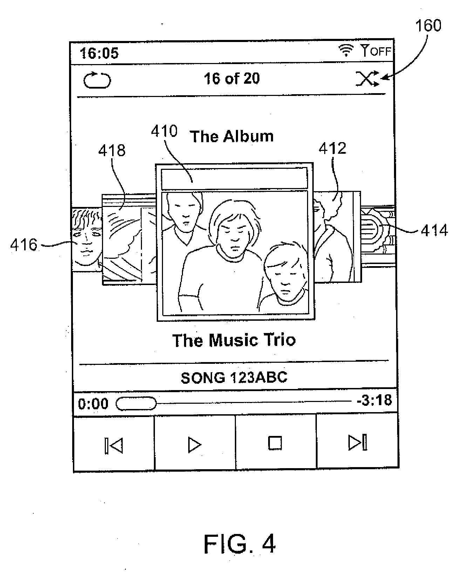

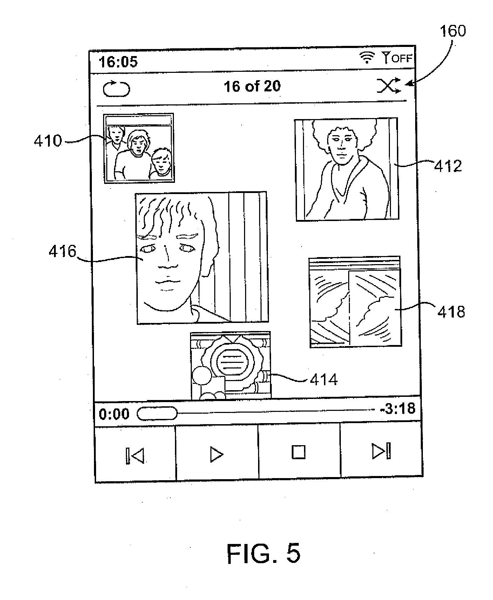

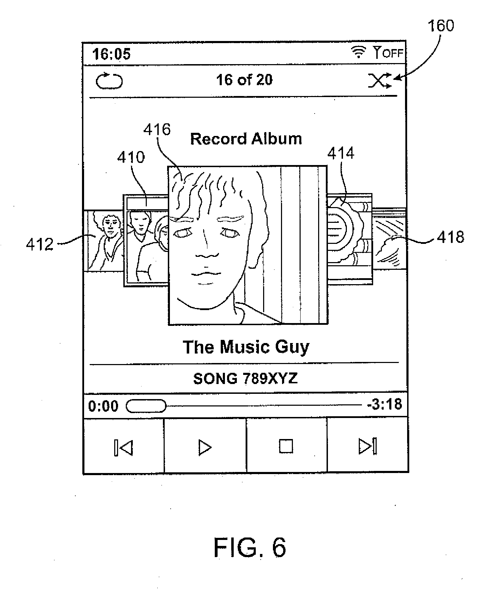

Another transition between a first position and a second position is illustrated by way of FIGS. 4-6. In FIG 4, the icons 410, 412, 414, 416, 418 are displayed on the graphical user interface 10. The graphical user interface 10 is the media player page of media application. In the first position, the centralized icon 410 is shown as a prominent icon as describe above. The icons 410, 412, 414, 416, 418 can be album covers as described above associated with the individual media files. When a request for a second order is received, the icons 410, 412, 414, 416, 418 transition as partially illustrated by FIG. 5 to the second illustrated position of FIG 6. While FIG 5 illustrates a single position of the icons 410, 412, 414, 416, 418, the icons 410, 412, 414, 416, 418 move around on the display to provide an indication to the operator that a shuffle operation is occurring, This indication of the shuffle operation allows the operator to receive positive feedback that a shuffle operation has been requested and has occurred. This visual signification of the shuffle operation provides instantaneous feedback to the operation is occurring.

As illustrated in FIG. 5, the size and position of the icons 410, 412, 414, 415, 418 has changed from the first position of the icons 410, 412, 414, 416, 418 in FIG. 4. The movement of the individual icons 410, 412, 414, 416, 418 on the display indicates that the icons and the associated media files have been reordered to a second order. The second order is presented in FIG. 6, wherein the icons 410, 412, 414, 416, 418 have a different order so that the icons are now arranged from left to right in the following order 412, 410, 416, 414, 418. The present disclosure contemplates the implementation with more media files and hence additional icons. The shuffling of icons between the first position and the second position can take a variety of different orders and can be achieved through the use of algorithms to provide random ordering.

Additionally, the shuffling of icons can include a blurred aftericon on the side of icon that is opposite of the forward direction of movement of the icon. This blurred aftericon can be implemented with one of the above described shuffling of icons or can be implemented separately. The blurred aftericon refers to an icon that is the same as the icon that the blurred aftericon is following except that the blurred aftericon is blurred to show the path of the icon. The blurred icon indicates the path of icon.

Furthermore, the icons can move in a chaotic motion on the screen in response to a request for a second order of icons. As the icons move in the chaotic motion, they are in a transitionary position between first position and second position. The chaotic motion of the icons signifies the shuffling of the icons and related media files.

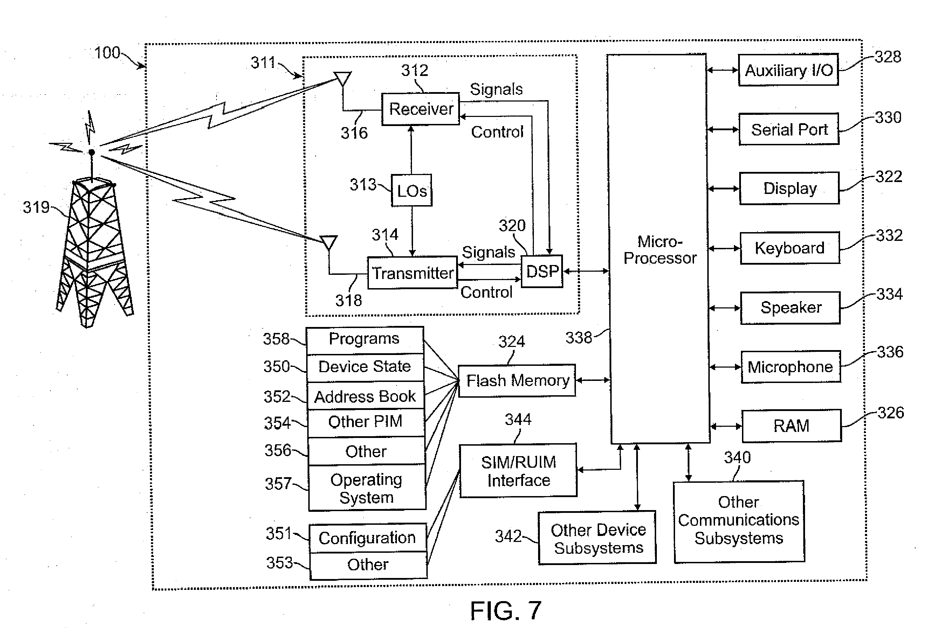

A mobile device 100, according to the present disclosure, can include components as illustrated in FIG. 7. While the components of FIG. 7 are not all inclusive, FIG. 7 illustrates components that can be included on a mobile device 100 according to the present disclosure. Additional components are required to allow the mobile device 100 to function, but have been omitted for clarity.

As illustrated in FIG. 7, the mobile device 100 includes a communication subsystem 311 to perform all communication transmission and reception with a wireless network 319. A processor module 338 can be connected with an auxiliary input/output (I/O) subsystem 328 which can be connected to the mobile device 100. The processor module 338 can include one or more processors. Additionally, the processors can be micro-processors for example. In at least one implementation, the processor module 338 can be connected to a serial port (for example, a Universal Serial Bus port) 330 which can allow for communication with other devices or systems. The display 325 can be connected to the processor module 338 to allow for displaying of information to an operator of the mobile device 100. When the mobile device 100 is equipped with a keyboard 322, the keyboard 322 can also be connected with the processor module 338. The mobile device 100 can include a speaker 334, a microphone 336, random access memory (RAM) 326, and flash memory 324, all of which can be connected to the processor module 338. Other similar components can be provided on the mobile device 100 as well and optionally connected to the processor module 338. Other communication subsystems 340 and other communication device subsystems 342 are generally indicated as being functionally connected with the processor module 338 as well. An example of the communication subsystem 340 is that of a short range communication system such as BLUETOOTH® communication module or a WI-FI® communication module (a communication module in compliance with IEEE 802.11 set of protocols) and associated circuits and components. The processor module 338 is able to perform operating system functions and enables execution of programs on the mobile device 100. In some implementations not all of the above components can be included in the mobile device 100.

The auxiliary I/O subsystem 328 can take the form of a trackpad navigation tool, or a trackball, a thumbwheel, a navigation pad, a joystick, touch-sensitive interface, or other I/O interface. While the above examples have been provided in relation to the auxiliary I/O subsystem 328, other subsystems capable of providing input or receiving output from the mobile device 100 are considered within the scope of this disclosure. Other keys can be placed along the side of the mobile device 100 to function as escape keys, volume control keys, scrolling keys, power switches, or user programmable keys, and can likewise be programmed accordingly.

Furthermore, the mobile device 100 is equipped with components to enable operation of various programs, as shown in FIG. 7. In an exemplary implementation, the flash memory 324 is enabled to provide a storage location for the operating system 357, device programs 358, and data. The operating system 357 is generally configured to manage other programs 358 that are also stored in memory 324 and executable on the processor. The operating system 357 honors requests for services made by programs 358 through predefined program 358 interfaces. More specifically, the operating system 357 typically determines the order in which multiple programs 358 are executed on the processor and the execution time allotted for each program 358, manages the sharing of memory 324 among multiple programs 358, handles input and output to and from other device subsystems 342, and so on. In addition, operators can typically interact directly with the operating system 357 through a user interface which can include the keyboard 322 and display screen 325. While in an exemplary implementation the operating system 357 is stored in flash memory 324, the operating system 357 in other implementations is stored in read-only memory (ROM) or similar storage element (not shown). As those skilled in the art will appreciate, the operating system 357, device program 358 or parts thereof can be loaded in RAM 326 or other volatile memory.

In one exemplary implementation, the flash memory 324 contains programs 358 for execution on the mobile device 100 including an address book 352, a personal information manager (PIM) 354, and the device state 350. Furthermore, programs 358 and other information 356 including data can be segregated upon storage in the flash memory 324 of the mobile device 100.

When the mobile device 100 is enabled for two-way communication within the wireless communication network 319, the mobile device 100 can send and receive messages from a mobile communication service. Examples of communication systems enabled for two-way communication include, but are not limited to, the General Packet Radio Service (GPRS) network, the Universal Mobile Telecommunication Service (UMTS) network, the Enhanced Data for Global Evolution (EDGE) network, the Code Division Multiple Access (CDMA) network, High-Speed Packet Access (HSPA) networks, Universal Mobile Telecommunication Service Time Division Duplexing (UMTS-TDD), Ultra Mobile Broadband (UMB) networks, Worldwide Interoperability for Microwave Access (WiMAX), and other networks that can be used for data and voice, or just data or voice. For the systems listed above, the communication device 100 can require a unique identifier to enable the communication device 100 to transmit and receive messages from the communication network 319. Other systems may not require such identifying information. GPRS, UMTS, and EDGE use a Subscriber Identity Module (SIM) in order to allow communication with the communication network 319. Likewise, most CDMA systems use a Removable User Identity Module (RUIM) in order to communicate with the CDMA network. The RUIM and SIM card can be used in multiple different mobile devices 100. The mobile device 100 can be able to operate some features without a SIM/RUIM card, but the mobile device 100 will not be able to communicate with the network 319. A SIM/RUIM interface 344 located within the mobile device 100 allows for removal or insertion of a SIM/RUIM card (not shown). The SIM/RUIM card features memory and holds key configurations 351, and other information 353 such as identification and subscriber related information. With a properly enabled mobile device 100, two-way communication between the mobile device 100 and communication network 319 is possible.

If the mobile device 100 is enabled as described above or the communication network 319 does not require such enablement, the two-way communication enabled mobile device 100 is able to both transmit and receive information from the communication network 319. The transfer of communication can be from the mobile device 100 or to the mobile device 100. In order to communicate with the communication network 319, the mobile device 100 in the presently described exemplary implementation is equipped with an integral or internal antenna 318 for transmitting messages to the communication network 319. Likewise the mobile device 100 in the presently described exemplary implementation is equipped with another antenna 316 for receiving communication from the communication network 319. These antennae (316, 318) in another exemplary implementation are combined into a single antenna (not shown). As one skilled in the art would appreciate, the antenna or antennae (316, 318) in another implementation are externally mounted on the mobile device 100.

When equipped for two-way communication, the mobile device 100 features the communication subsystem 311. As is understood in the art, this communication subsystem 311 is modified so that the communication subsystem 311 can support the operational needs of the mobile device 100. The subsystem 311 includes a transmitter 314 and receiver 312 including the associated antenna or antennae (316, 318) as described above, local oscillators (LOs) 313, and a processing module which in the presently described exemplary implementation is a digital signal processor (DSP) 320.

In at least one implementation, communication by the mobile device 100 with the wireless network 319 can be any type of communication that both the wireless network 319 and mobile device 100 are enabled to transmit, receive and process. In general, these can be classified as voice and data. Voice communication generally refers to communication in which messages for audible sounds are transmitted by the mobile device 100 through the communication network 319. Data generally refers to all other types of communication that the mobile device 100 is capable of performing within the constraints of the wireless network 319.

Example device programs that can depend on such data include email, contacts and calendars. For each such program, synchronization with home-based versions of the programs can be desirable for either or both of their long term and short term utility. As an example, emails are often time sensitive, so substantially real time synchronization can be desired. Contacts, on the other hand, can be usually updated less frequently without inconvenience. Therefore, the utility of the mobile device 100 is enhanced when connectable within a communication system, and when connectable on a wireless basis in the network 319 in which voice, text messaging, and other data transfer are accommodated.

The technology described herein can take the forms of hardware, software or both hardware and software elements. In some implementations, the technology is implemented in software, which includes, but is not limited to, firmware, resident software, microcode, a Field Programmable Gate Array (FPGA) or Application-Specific Integrated Circuit (ASIC), etc. In particular, for real-time or near real-time use, an FPGA or ASIC implementation is desirable.

Furthermore, the present technology can take the form of a computer program product comprising program modules accessible from computer-usable or computer-readable medium storing program code for use by or in connection with one or more computers, processors, or instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums as signal carriers per se are not included in the definition of physical computer-readable medium). Examples of a physical computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W) and DVD. Both processors and program code for implementing each as aspect of the technology can be centralized or distributed (or a combination thereof) as known to those skilled in the art. Additionally, the memory can be a non-transitory computer readable medium and can include processor executable instructions and data structures that implement aspect of the subject innovation.

Furthermore, the present technology can take the form of a computer program product comprising program modules accessible from computer-usable or computer-readable medium storing program code for use by or in connection with one or more computers, processors, or instruction execution system, For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium (though propagation mediums as signal carriers per se are not included in the definition of physical computer-readable medium). Examples of a physical computer-readable medium include a semiconductor or solid state memory, removable memory connected via USB, magnetic tape, a removable computer diskette, a random access memory (RAM), a read-only memory (ROM), a rigid magnetic disk, an optical disk, transitory memory, and non-transitory memory. Current examples of optical disks include compact disk - read only memory (CD-ROM), compact disk - read/write (CD-R/W), DVD, and Blu RayTM. Additionally, Non-transitory memory also can store programs, device state, various user information, one or more operating systems, device configuration data, and other data that may need to be accessed persistently. Both processors and program code for implementing each medium as an aspect of the technology can be centralized or distributed (or a combination thereof) as known to those skilled in the art.

A data processing system suitable for storing a computer program product of the present technology and for executing the program code of the computer program product will include at least one processor coupled directly or indirectly to memory elements through a system bus. The memory elements can include local memory employed during actual execution of the program code, bulk storage, and cache memories that provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters can also be coupled to the system to enable the data processing system to become coupled to other data processing systems or remote printers or storage devices through intervening private or public networks. Modems, cable modem, WiFi, and Ethernet cards are just a few of the currently available types of network adapters. Such systems can be centralized or distributed, e.g., in peer-to-peer and client/server configurations. In some implementations, the data processing system is implemented using one or both of FPGAs and ASICs.

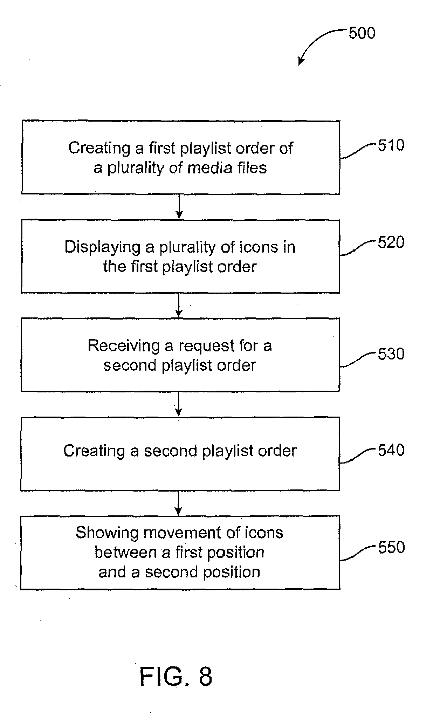

In another implementation as illustrated in FIG. 8, the present disclosure contemplates a method of shuffling a media file in a playlist (500). The method includes creating a first playlist order of a plurality of media files (block 510). The first playlist order can be created in response to a request for a shuffle or can be a predetermined order of the media files. The method also includes displaying a plurality of icons each corresponding to one of the plurality of media files on a display of a mobile device, wherein the plurality of icons are arranged according to the first playlist order of the plurality of media files (block 520). The display of the icons can be as described above. Furthermore, the method includes receiving a request for a second playlist order of the plurality of media files (block 530). The receipt of a request for the second playlist order can be in response to a touch activation of the display or a button of the device or another input received by the device. The method creates a second playlist order of the plurality of media files in response to receiving the request for the second playlist order (block 540). The method also while displaying the plurality of icons in the first playlist order, shows the movement of at least two icons on the display so that the at least two icons are illustrated in transition between a first position corresponding to the first playlist order and a second position corresponding to the second playlist order (block 550).

The method can display icons in transition between the first position and the second position by showing at least two of the plurality of icons moving towards a bottom of the display. Additionally, the method shows the transition between the first position and the second position by further moving the at least two of the plurality icons from the top of the display to the second position. The transition from the top of the display can have the icons arranged in the second order and above their second position.

In an alternative implementation, the method shows the transition between the first position and the second position by moving the at least two of the plurality of icons across the display.

The above described method can be implemented on a processing module of the mobile device 100 as described herein. Additionally, the instructions for execution by the processing module can be stored in a storage medium such as the flash memory of the mobile device.

Exemplary implementations have been described hereinabove regarding a mobile device 100 capable of providing icons in a first position and second position and illustrating a transition between the first position and the second position. With the system and method of visual shuffling of media icons described herein, organization and selection of media files stored on a mobile device is enhanced by the visual shuffling. As each of the media files or sets of media files is visually represented and displayed on the display during playback, creation of playlists, and shuffling of playlists, the user is provided with limited by useful visual information to organize the media files for playback and to control the playback of the media files. One of ordinary skill in the art will appreciate that the features in each of the figures described herein can be combined with one another and arranged to achieve the described benefits of the presently disclosed retention mechanism for a navigation tool of a mobile device 100. Additionally, one of ordinary skill will appreciate that the elements and features from the illustrated implementations herein can be optionally included to achieve the described benefits of the presently disclosed retention mechanism for a navigation tool of a mobile device. Various modifications to and departures from the disclosed implementations will occur to those having skill in the art. The subject matter that is intended to be within the spirit of this disclosure is set forth in the following claims.

## Claims

1. A method for shuffling a media file in a playlist comprising:
Creating (510) a first playlist order of a plurality of media files;
Displaying (520) a plurality of icons (110, 120a-d) each corresponding to one of the plurality of media files on a display (30) of a mobile device (100), wherein the plurality of icons (110, 120a-d) are arranged according to the first playlist order of the plurality of media files;
receiving (530) a request for a second playlist order of the plurality of media files;
creating (540) a second playlist order of the plurality of media files in response to receiving the request for the second playlist order;
showing (550) the movement of at least two of the plurality of icons (110, 120a-d) on the display so that the at least two icons (110, 120a-d) are illustrated in transition between a first position corresponding to the first playlist order and a second position corresponding to the second playlist order.

2. The method as recited in claim 1, wherein the transition between the first position and the second position is illustrated by the at least two of the plurality of icons (110, 120a-d) moving towards a bottom of the display (30).

3. The method as recited in claim 2, wherein the transition between the first position and the second position further includes moving the at least two of the plurality icons (110, 120a-d) from the top of the display (30) to the second position.

4. The method as recited in any one of the preceding claims, wherein the transition between the first position and the second position is illustrated by moving the at least two of the plurality of icons (110, 120a-d) across the display (30).

5. The method as recited in any one of the preceding claims, wherein the plurality of icons (110, 120a-d) are arranged in a curvilinear array on the display (30).

6. The method of claim 5, wherein the curvilinear array is a semicircular array.

7. The method as recited in any one of claims 5-6, wherein a central icon (110) located in about the horizontal center of the display is a currently playing media file.

8. The method as recited in any one of claims 5-7, wherein each of the plurality of icons (110, 120a-d) in the curvilinear array are transitioned towards and off a bottom of the display (30) while in their respective first positions corresponding to the first order.

9. The method of claim 8, wherein each of the plurality of icons (110, 120a-d) in the curvilinear array are transitioned from the top of the display (30) to a home position while in their respective second positions corresponding to the second order.

10. The method as recited in any one of the preceding claims, wherein the showing the movement of the at least two icons (110, 120a-d) includes a blurred aftericon on a side of the at least two icons (110, 120a-d) that is opposite of a forward direction of movement of the icon.

11. The method as recited in any one of the preceding claims, wherein the movement of the at least two icons (110, 120a-d) is in a chaotic motion.

12. The method as recited in anyone of the preceding claims, wherein the media file is one of an audio file, a video file, and a multi-media file.

13. The method as recited in anyone of the preceding claims, wherein each of the plurality of icons (110, 120a-d) is an artwork associated with the media file.

14. A mobile device (110) comprising:
a touch display (30) that displays a plurality of icons (110, 120a-d) corresponding to a plurality of media files;
a processor module (338) coupled to the touch display (30), wherein the processor module (338)is operable to execute instructions for the method as recited in any one of claims 1-13.

15. A computer program product for operation for shuffling media files in a playlist, the computer program product comprising:
at least one computer-readable medium (324),
at least one shuffling module (358), residing on the at least one computer-readable medium (324), and operative to execute the method as recited in any of claims 1-13.
